# EUROPEAN PATENT APPLICATION

(11) **EP 4 734 500 A1**
(43) Date of publication of application: **29.04.2026**
(21) Application number: 23942102.7
(22) Date of filing: 19.10.2023
(51) Int. Cl.: H04N 5/775, H04N 7/52

(54) **DATA TRANSMISSION METHOD AND APPARATUS, CHIP, ELECTRONIC DEVICE, AND STORAGE MEDIUM**

(30) Priority: 20.06.2023 CN 202310731091
(71) Applicant: Chipone Technology (Beijing) Co., Ltd., Beijing 100176 (CN)
(72) Inventor: LIN, ChihYing, Beijing 100176 (CN); CHEN, Yen Hsun, Beijing 100176 (CN)
(74) Representative: Bals & Vogel Patentanwälte PartGmbB
(86) International application number: PCT/CN2023/125405
(87) International publication number: WO 2024/259835

(57) **Abstract**

The present disclosure provides a data transmission method and device, a chip, an electronic device, and a storage medium. The data transmission method includes: transmitting display data during a first period of a strobe signal, and transmitting a check code during a second period of the strobe signal; determining, based on the period of the strobe signal, whether the transmitted data is the display data or the check code, and, after identifying that the transmitted data is the check code, checking and correcting the display data using the check code. By transmitting the check code during the blanking period (i.e., the second period) of the strobe signal in LVDS transmission and then checking and correcting the display data transmitted during the first period using the check code, an influence of abnormal interference in the transmission can be mitigated. This enables erroneous data to be identified and corrected simultaneously, thereby increasing the data transmission rate, ensuring the accuracy and reliability of display data transmission, thereby improving display performance.

## Description

This application claims priority to Chinese invention application No. 2023107310915, filed on June 20, 2023, titled "DATA TRANSMISSION METHOD AND DEVICE, CHIP, ELECTRONIC DEVICE, AND STORAGE MEDIUM," and incorporates by reference the entire specification, claims, drawings, and abstract of the aforementioned Chinese invention application.

### TECHNICAL FIELD

The present disclosure relates to the field of display technology, and more particularly to a data transmission method and device, a chip, an electronic device, and a storage medium.

### BACKGROUND

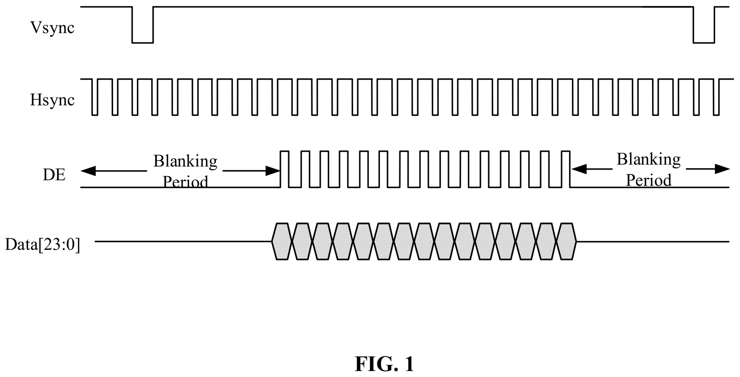

Typically, when information is transmitted between a host system (Host) and a display module, data transmission is performed by converting information such as text, numbers, and symbols into binary data. In conventional Low Voltage Differential Signaling (LVDS) transmission, data (Data) is validly input during the gating period of the valid display data strobe signal DE, while no data is input during its blanking time, as shown in FIG. 1. The data itself lacks a checking mechanism; thus, if interference such as noise occurs during transmission, image quality will be affected.

In video transmission, the blanking time of the DE signal is necessary. Besides considering the time reserved for IC signal processing, functions such as Gate-in-Panel (GIP, also known as gate circuits integrated on the display panel) and touch detection require the use of blanking time. During this period, LVDS transmits empty signals, resulting in wasted transmission bandwidth. Moreover, when abnormal interference occurs, transmission bit errors may arise, and data loss could lead to display abnormalities.

To overcome this deficiency, conventional methods involve using one transmission line to send one data unit at a time, employing Error Correcting Code (ECC) to verify data correctness. If the data is verified as correct, the next data unit is transmitted; otherwise, re-transmission of the correct data is requested until verification passes before proceeding.

This method transmits only one data unit at a time and cannot correct data while identifying errors, resulting in slow data transmission rate, which fails to meet the increasing demand for higher data transmission rates in computer systems.

### SUMMARY

To solve the aforementioned technical problems, the present disclosure provides a data transmission method and device, a chip, an electronic device, and a storage medium, capable of correcting data while identifying erroneous data, improving data transmission rate, ensuring accuracy and reliability of display data transmission, and thereby enhancing display system performance.

In one aspect, the present disclosure provides a data transmission method, wherein a display unit reads display data under control of a strobe signal to perform image display, the data transmission method comprising:
transmitting the display data during a first period of the strobe signal, and transmitting a check code during a second period of the strobe signal, the check code being configured to perform error check and correction on the display data and to correct erroneous data bits identified through such error check; and
determining, based on the period of the strobe signal, whether the transmitted data is the display data or the check code, and, after identifying the check code, checking and correcting the display data using the check code.

Optionally, before transmitting the display data during the first period of the strobe signal and transmitting the check code during the second period of the strobe signal, the method further comprises:
a data encoding stage, in which the check code is generated based on the display data and is embedded into a header and/or a footer of the display data.

Optionally, the strobe signal is a continuous periodic pulse signal during the first period, and is a continuous low-level signal during the second period.

Optionally, the step of determining, based on the period of the strobe signal, whether the transmitted data is the display data or the check code comprises:
when a line synchronization signal is detected and the second period of the strobe signal is not detected, determining that the transmitted data is the check code; and when the line synchronization signal is detected and the first period of the strobe signal is detected, determining that the transmitted data is the display data.

Optionally, the check code is generated using any one selected from ECC, CRC, and checksum.

Optionally, the step of generating the check code based on the display data during the data encoding stage further comprises:
generating a data block header based on the display data to be transmitted, the data block header being sequentially concatenated with the check code and the display data to form the transmission data; and
wherein the step of determining, based on the period of the strobe signal, whether the transmitted data is the display data or the check code further comprises:
   determining whether the data block header in the transmission data meets a preset condition, and, upon determining that the preset condition is met, using the data block header of the current transmission data as a starting position;
   when the line synchronization signal is detected and the first period of the strobe signal is not detected, determining that the transmitted data is the check code; and when the line synchronization signal is detected and the first period of the strobe signal is detected, determining that the transmitted data is the display data.

Optionally, the step of checking and correcting the display data using the check code after the check code is identified comprises:
checking subsequent display data using the check code, and, if an error occurs, correcting the erroneous data bits using the check code according to a corresponding algorithm, and recording and storing the erroneous data.

In another aspect, the present disclosure further provides a data transmission device, the data transmission device being coupled to a display unit, the display unit reading display data under control of a strobe signal to perform image display, wherein the data transmission device comprises:
a transmission unit configured to transmit the display data during a first period of the strobe signal and to transmit a check code during a second period of the strobe signal, the check code being configured to perform error check and correction on the display data and to correct erroneous data bits identified through such error check; and
a correction unit coupled to the transmission unit and configured to determine, based on the period of the strobe signal, whether the transmitted data is the display data or the check code, and, after identifying the check code, to check and correct the display data using the check code.

Optionally, the data transmission device further comprises:
a computation unit configured to generate the check code based on the display data during the data encoding stage and to embed the check code into a header and/or a footer of the display data.

In another aspect, the present disclosure further provides a display chip, comprising the data transmission device described above.

In another aspect, the present disclosure further provides an electronic device comprising a memory and a processor, the memory storing a computer program, wherein the processor, when executing the computer program, is configured to implement the steps of the data transmission method described above.

In another aspect, the present disclosure further provides a computer-readable storage medium storing a computer program, wherein the computer program, when executed by a processor, is configured to implement the steps of the data transmission method described above.

The beneficial effects of the present disclosure are: according to the data transmission method and device, chip, electronic device, and storage medium provided herein, the data transmission method includes: transmitting display data during a first period of the strobe signal, and transmitting a check code during a second period of the strobe signal; determining, based on the period of the strobe signal, whether the transmitted data is the display data or the check code, and, after identifying the check code, checking and correcting the display data using the check code. Using this method, there is no need to modify the hardware routing for data transmission in LVDS technology, and the underlying transmission mode of LVDS technology remains unchanged. Only the encoding of the transmission data is altered by embedding the check code, generated based on the display data to be transmitted, into the transmission data (LVDS signal, hereinafter the same). The check code is transmitted during the blanking period (i.e., the second period) of the strobe signal in LVDS signal transmission, and then used to check and correct the display data transmitted during the first period of the strobe signal, thereby eliminating the impact of abnormal interference during transmission. This allows simultaneous identification and correction of erroneous data, improves data transmission rate, ensuring accuracy and reliability of display data transmission, and thereby enhancing display performance.

### BRIEF DESCRIPTION OF THE DRAWINGS

Through the following description of embodiments of the present disclosure with reference to the accompanying drawings, the above and other objects, features, and advantages of the present disclosure will become more apparent.
FIG. 1 illustrates a timing chart of conventional display data transmission;
FIG. 2 illustrates a flowchart of the data transmission method provided in an embodiment of the present disclosure;
FIG. 3 illustrates a model diagram of the data transmission method shown in FIG. 2 in a specific implementation;
FIG. 4 illustrates a transmission diagram of conventional display data during an active period of the strobe signal;
FIG. 5 illustrates a timing chart of the data transmission method shown in FIG. 2 in an application scenario;
FIG. 6a and FIG. 6b respectively illustrate implementation effects of conventional technology and the technical solution of the present disclosure in data transmission with noise interference;
FIG. 7 illustrates a schematic diagram of a data transmission device provided in an embodiment of the present disclosure;
FIG. 8 illustrates a structural diagram of an electronic device provided in an embodiment of the present disclosure.

### DETAILED DESCRIPTION

For a better understanding of the present disclosure, the following description refers to the accompanying drawings for a more comprehensive explanation of the present disclosure. The drawings illustrate preferred embodiments of the present disclosure. However, the present disclosure may be implemented in various forms and is not limited to the embodiments described herein. On the contrary, these embodiments are provided to make the understanding of the present disclosure more thorough and complete.

Unless otherwise defined, all technical and scientific terms used herein have the same meanings as commonly understood by those skilled in the art to which the present disclosure pertains. The terms used in the specification of the present disclosure are for the purpose of describing specific embodiments only and are not intended to limit the present disclosure.

It is known that LVDS (Low Voltage Differential Signaling) is a low-amplitude differential signaling technology. It uses very low-amplitude signals (approximately 350 mV) to transmit data through a pair of differential PCB traces or balanced cables. It can transmit serial data at speeds of up to several thousand Mbps. Because the voltage amplitude is low and a constant-current-source driving mode is adopted, it generates only very low noise and consumes very little power, with power consumption remaining almost unchanged regardless of frequency. In addition, because LVDS transmits data in a differential manner, it is less susceptible to common-mode noise.

In civilian applications, LVDS technology supports high-speed data transmission and is most suitable for communication architecture applications such as base stations, switches, add/drop multiplexers, consumer product applications such as set-top boxes and home/enterprise video links, and medical ultrasound imaging equipment and digital copiers, ensuring greater flexibility in system partitioning operations. System design engineers can use LVDS technology to place analog and digital signal processing sections on different circuit boards and then transmit digital data output from A/D converters via cables or backplanes, ensuring greater flexibility in structural design. Currently, various high-speed AD converters generally choose to use LVDS signals as the output format for sampled data, with output forms mostly being parallel outputs.

In the field of liquid crystal displays, the function of the line synchronization signal (HS or Hsync) is to select the effective line signal interval on the liquid crystal panel, and the function of the field synchronization signal (VS or Vsync) is to select the effective field signal interval on the liquid crystal panel. The combined effect of line and field synchronization signals selects the effective video signal interval on the liquid crystal panel. In the TTL and LVDS interfaces of liquid crystal panels, the main signals include RGB data signals, pixel clock signal DCLK, line synchronization signal Hsync, field synchronization signal Vsync, and valid display data strobe signal DE (hereinafter referred to as strobe signal). All liquid crystal panels require input of RGB data and pixel clock DCLK, but their methods of using synchronization signals differ. The embodiments of existing technologies and corresponding technical solutions described in this disclosure are applied to liquid crystal panels that simultaneously use DE/Hsync/Vsync synchronization signals. Such liquid crystal panels require simultaneous input of strobe signal DE, line synchronization signal Hsync, and field synchronization signal Vsync to operate normally.

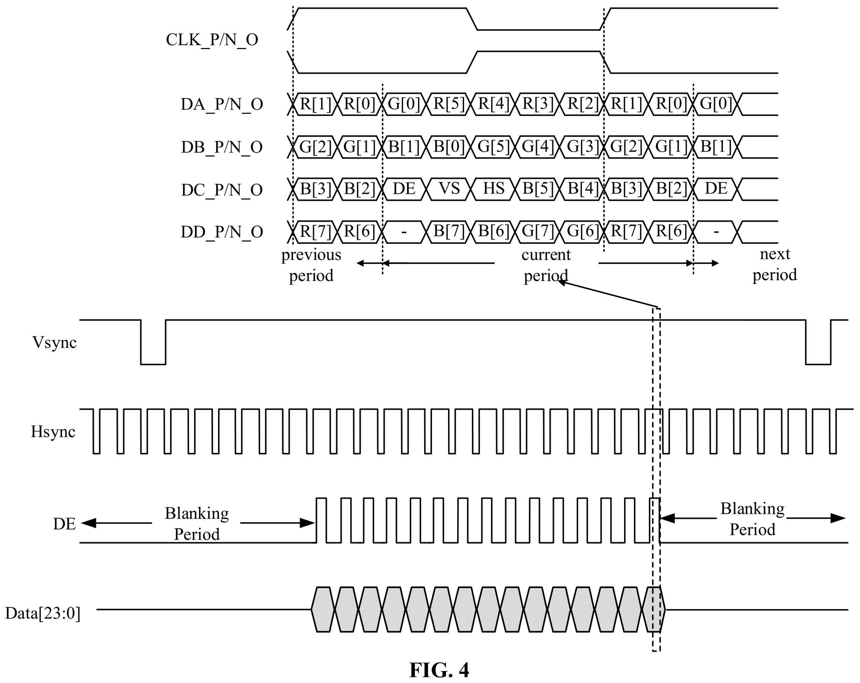

As mentioned above, conventional display data (i.e., LVDS signals, hereinafter the same) transmission occurs during the continuous pulse interval of the strobe signal (i.e., the second period), while no data is transmitted during the blanking period (i.e., the first period), as shown in FIG. 1 and FIG. 4. The display data itself lacks a checking mechanism; thus, if interference occurs during transmission, image quality will be affected.

Based on this, the data transmission method in the embodiments of the present disclosure is proposed, which utilizes the transmission bandwidth of this blanking period to transmit the check code generated based on the display data, and uses the check code to identify and correct erroneous data simultaneously during display data transmission, improving data transmission rate and utilization of transmission bandwidth, while ensuring transmission accuracy, thereby enhancing display performance.

Next, the present disclosure will be described in detail with reference to the drawings.

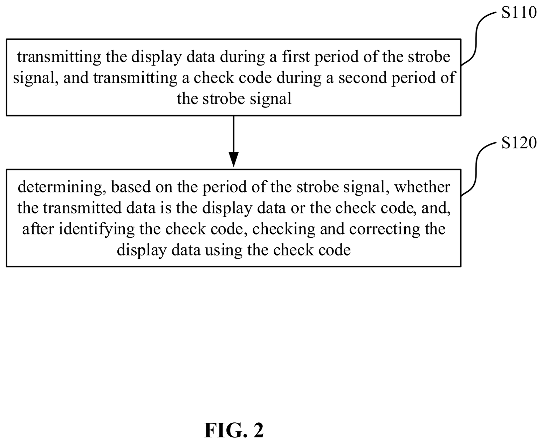

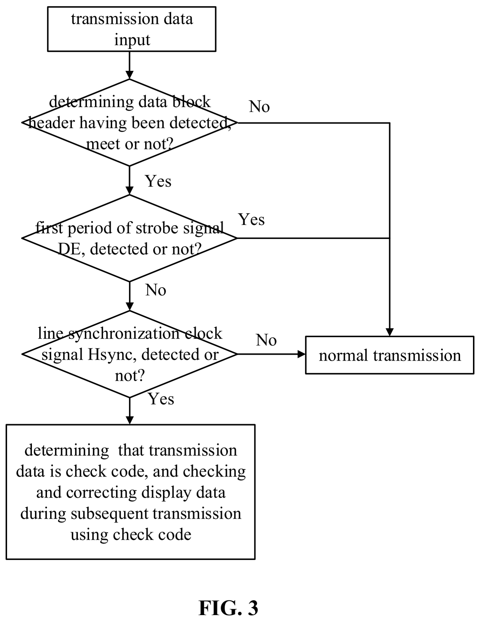

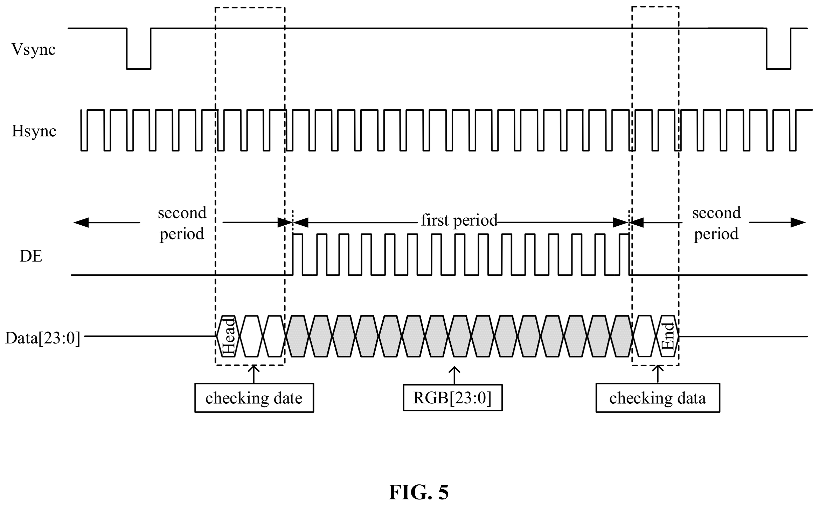

FIG. 2 illustrates a flowchart of the data transmission method provided in an embodiment of the present disclosure, FIG. 3 illustrates a model diagram of the data transmission method shown in FIG. 2 in a specific implementation, and FIG. 5 illustrates a timing chart of the data transmission method shown in FIG. 2 in an application scenario.

An embodiment of the present disclosure provides a data transmission method, which is applied to liquid crystal panels that simultaneously use DE/Hsync/Vsync synchronization signals. Such liquid crystal panels require simultaneous input of strobe signal DE, line synchronization signal Hsync, and field synchronization signal Vsync to operate normally. After a host system (Host) transmits LVDS signals to a display unit, the display unit reads display data under control of the strobe signal DE to perform image display. With reference to FIG. 2, the data transmission method includes:
S110: transmitting the display data during a first period of the strobe signal, and transmitting a check code during a second period of the strobe signal.
S120: determining, based on the period of the strobe signal, whether the transmitted data is the display data or the check code, and, after identifying the check code, checking and correcting the display data using the check code.

In some embodiments, the check code is used to perform error check and correction on the display data and to correct identified erroneous data bits.

In some embodiments, the check code is generated using any one selected from ECC, CRC, and checksum.

Prior to step S110 of transmitting the display data during the first period of the strobe signal and transmitting the check code during the second period of the strobe signal, the data transmission method includes:
a data encoding stage, in which the check code is generated based on the display data and is embedded into a header and/or a footer of the display data. In this embodiment, as shown in FIG. 5, the encoded check data (check code) is embedded into both the header and the footer of the display data (RGB[23:0]). Of course, in other alternative embodiments, the check code may be independently embedded into either the header or the footer of the display data. Correspondingly, in specific implementations of other steps, flexible adjustments can be made. For example, if the check code is embedded only in the header of the display data, the check code is received first, followed by the display data, and after identifying the check code, the display data can be checked and corrected during subsequent transmission. This not only improves transmission efficiency but also ensures the accuracy of transmitted display data. If the check code is embedded only in the footer of the display data, the display data is received first, followed by the check code, and after identifying the check code, the received display data can be checked and corrected. Other implementation schemes can be operated similarly, and will not be described in detail here.

In some embodiments, the strobe signal DE is a continuous periodic pulse signal during the first period, and the strobe signal DE is a continuous low-level signal during the second period, as shown in FIG. 5.

In some embodiments, step S120 of determining, based on the period of the strobe signal, whether the transmitted data is the display data or the check code includes:
when the line synchronization signal Hsync is detected and the first period of the strobe signal DE is not detected, i.e., when the strobe signal DE is in the second period, determining that the transmitted data Data[23:0] is the check code; when the line synchronization signal Hsync is detected and the first period of the strobe signal DE is detected, determining that the transmitted data Data[23:0] is the display data RGB[23:0].

In some embodiments, the step of generating the check code based on the display data during the data encoding stage further includes:
generating a data block header Head based on the display data RGB[23:0] to be transmitted, the data block header Head being sequentially concatenated with the check code and the display data RGB[23:0] to form the transmission data Data[23:0]. In this embodiment, part of the check data (check code) is embedded into the header of the display data RGB[23:0], and another part is embedded into the footer of the display data RGB[23:0]. This is more advantageous for detection, judgment, error detection, and correction of the display data RGB[23:0], thereby avoiding identification errors when transmission data is too long, further improving the accuracy of display data transmission, and also enhancing transmission efficiency.

In the application model shown in FIG. 3, the step of determining, based on the period of the strobe signal, whether the transmitted data is the display data or the check code further includes:
determining whether the data block header Head in the transmission data Data[23:0] meets a preset condition, and, upon determining that the preset condition is met, using the data block header Head of the current transmission data Data[23:0] as a starting position;
otherwise, transmitting data normally without additional processing;
when the line synchronization signal Hsync is detected and the first period of the strobe signal DE is detected, determining that the transmitted data Data[23:0] is the display data RGB[23:0], transmitting data normally without additional processing;
when the line synchronization signal Hsync is detected and the first period of the strobe signal DE is not detected, determining that the transmitted data Data[23:0] is the check code;
after determining that the transmission data Data[23:0] is the check code, using the check code to check and correct subsequent display data RGB[23:0].

In this embodiment, the data block header mentioned above may be a specific character. The aforementioned preset condition includes a bit, a byte, or any combination of data associated with the current sequence of transmission data, used to compare the judgment from "no data" to "data present in the data transmission channel, thereby avoiding erroneous system judgments due to noise. The determination of whether the preset condition is met is performed by comparing and confirming whether the information in the data block header is consistent; consistency indicates that the preset condition is met, while inconsistency indicates that the preset condition is not met, and corresponding steps are executed accordingly.

In some embodiments, the step of checking and correcting the display data using the check code after the check code is identified may include:
checking subsequent display data RGB[23:0] using the check code; if an error is detected, correcting the erroneous data bits using the check code according to a corresponding algorithm, and recording and storing error information, such as the location of the erroneous data, the number of times data at that location has been erroneous, the field address of the current transmission data, and so on.

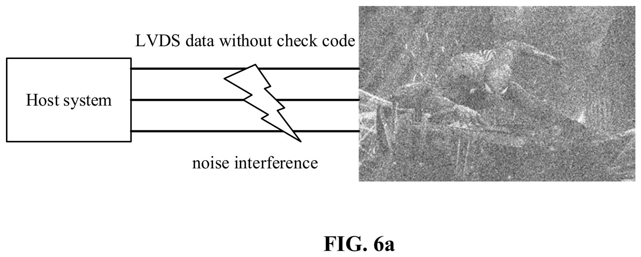

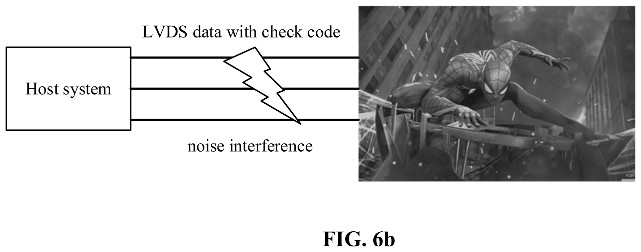

In summary, using the data transmission method provided in this embodiment, there is no need to modify the existing hardware wiring for data transmission under LVDS technology, and the underlying transmission mode of existing LVDS technology remains unchanged. Only the encoding of the transmission data is altered by embedding the check code, generated based on the display data to be transmitted, into the transmission data (LVDS signal, hereinafter the same). The check code is transmitted during the blanking period (i.e., the second period) of the strobe signal DE in LVDS signal transmission, and then used to check and correct the display data transmitted during the first period of the strobe signal DE, thereby eliminating the impact of abnormal interference during transmission and ensuring the accuracy of transmitted data. The effect is shown in FIG. 6a and FIG. 6b, where the former illustrates the display result caused by noise interference without transmitting the check code, leading to erroneous display data, and the latter illustrates the display result after correction using the check code. Thus, erroneous data can be identified and corrected simultaneously, improving data transmission rate, ensuring accuracy and reliability of display data transmission, and thereby enhancing display performance.

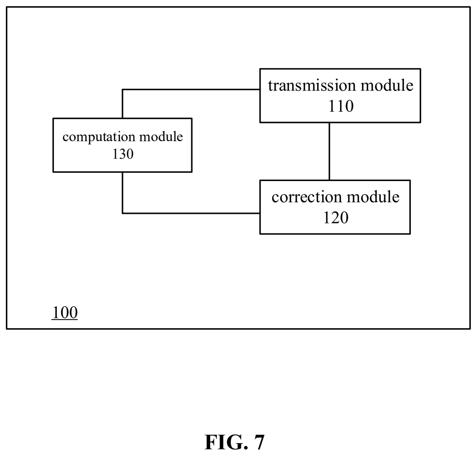

FIG. 7 illustrates a schematic diagram of the data transmission device provided in an embodiment of the present disclosure.

With reference to FIG. 7, in another aspect, an embodiment of the present disclosure further provides a data transmission device 100. The data transmission device 100 is coupled to a display unit (not shown), and the display unit reads display data under control of the strobe signal DE to perform image display. In combination with FIG. 7 and the foregoing embodiments, the data transmission device 100 includes: a transmission module 110, a correction module 120, and a computation module 130.

Among these, the transmission module 110 is configured to transmit the display data during the first period of the strobe signal DE, and to transmit the check code during the second period of the strobe signal DE, the check code being configured to perform error check and correction on the display data and to correct erroneous data bits identified through such error check;
the correction module 120 is connected to the transmission module 110 and is configured to determine, based on which period of the strobe signal DE is active, whether the transmitted data is the display data or the check code, and, after identifying the check code, to check and correct the display data using the check code;
the computation module 130 is configured to generate the check code based on the display data during the data encoding stage and to embed the check code into a header and/or a footer of the display data.

In another aspect, an embodiment of the present disclosure further provides a display chip, which includes the data transmission device 100 described above. The display chip is connected to the display unit, and the display unit reads display data under control of the strobe signal DE to perform image display.

Additionally, the data transmission method described in the embodiments of the present disclosure with reference to FIG. 2 may be implemented by an electronic device.

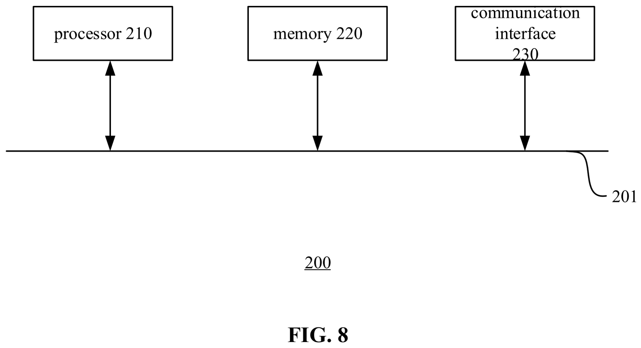

FIG. 8 is a structural diagram of the electronic device provided in an embodiment of the present disclosure.

In another aspect, the electronic device 200 provided in an embodiment of the present disclosure may include a processor 210 and a memory 220 storing computer program instructions.

Specifically, the processor 210 may include a central processing unit (CPU), or an application-specific integrated circuit (ASIC), or may be configured to implement one or more integrated circuits or modules as described in the embodiments of the present disclosure.

The memory 220 may include large-capacity storage for data or instructions. For example, but not limited to, the memory 220 may include a hard disk drive (HDD), floppy disk drive, solid-state drive (SSD), flash memory, optical disc, magneto-optical disc, magnetic tape, or universal serial bus (USB) drive, or a combination of two or more of these. Where appropriate, the memory 220 may include removable or non-removable (or fixed) media. Where appropriate, the memory 220 may be located internally or externally to the data processing apparatus. In specific embodiments, the memory 220 is a non-volatile memory. In specific embodiments, the memory 220 includes read-only memory (ROM) and random access memory (RAM). Where appropriate, the ROM may be mask-programmed ROM, programmable ROM (PROM), erasable PROM (EPROM), electrically erasable PROM (EEPROM), electrically alterable ROM (EAROM), or flash memory (FLASH), or a combination of two or more of these. Where appropriate, the RAM may be static random-access memory (SRAM) or dynamic random access memory (DRAM), where DRAM may be fast page mode dynamic random access memory (FPMDRAM), extended data output dynamic random access memory (EDODRAM), or synchronous dynamic random-access memory (SDRAM).

The memory 220 can be used to store or cache various data files that need to be processed and/or communicated, as well as possible computer program instructions executed by the processor 210.

The processor 210 reads and executes computer program instructions stored in the memory 220 to implement any one of the data transmission methods described in the above embodiments.

In some of these embodiments, the electronic device 200 may further include a communication interface 230 and a bus 201. As shown in FIG. 8, the processor 210, memory 220, and communication interface 230 are connected via the bus 201 and are configured to perform mutual communication.

The communication interface 230 is used to implement communication among various modules, devices, units, and/or devices in the embodiments of the present disclosure. The communication interface 230 can also enable data communication with other components such as external devices, image/data acquisition devices, databases, external storage, and image/data processing workstations.

The bus 201 includes hardware, software, or both, for coupling the components of the electronic device 200 together. The bus 201 includes, but is not limited to, at least one of the following: data bus, address bus, control bus, expansion bus, and local bus. For example, but not limited to, the bus 201 may include an accelerated graphics port (AGP) or other graphics buses, extended industry standard architecture (EISA) bus, front side bus (FSB), hyper transport (HT) interconnect, industry standard architecture (ISA) bus, InfiniBand interconnect, low pin count (LPC) bus, memory bus, micro channel architecture (MCA) bus, peripheral component interconnect (PCI) bus, PCI-Express (PCI-X) bus, serial advanced technology attachment (SATA) bus, video electronics standards association local (VLB) bus, or other suitable buses, or a combination of two or more of these. Where appropriate, the bus 201 may include one or more buses. Although specific buses are described and illustrated in the embodiments of the present disclosure, any suitable bus or interconnect is considered within the scope of the present disclosure.

The electronic device 200 can execute the data transmission method described in FIG. 2 of the embodiments of the present disclosure based on acquired instructions.

Additionally, in combination with the data transmission method in the above embodiments, the embodiments of the present disclosure may provide a computer-readable storage medium to implement the method. The computer-readable storage medium stores computer program instructions; when the computer program instructions are executed by a processor, they implement any one of the data transmission methods described in the above embodiments. Those skilled in the art can understand that all or part of the processes in implementing the methods described in the above embodiments can be completed by instructing relevant hardware via computer programs. The computer programs may be stored in a non-volatile computer-readable storage medium. When executed, the computer programs may include the processes of the various method embodiments described above. In addition, any reference in the various embodiments provided herein to memory, storage, database, or other media includes non-volatile and/or volatile memory. Non-volatile memory may include read-only memory (ROM), programmable ROM (PROM), electrically programmable ROM (EPROM), electrically erasable programmable ROM (EEPROM), or flash memory. Volatile memory may include random access memory (RAM) or external high-speed cache memory. By way of example and not limitation, RAM may be available in various forms, such as static RAM (SRAM), dynamic RAM (DRAM), synchronous DRAM (SDRAM), double data rate SDRAM (DDRSDRAM), enhanced SDRAM (ESDRAM), synchlink DRAM (SLDRAM), Rambus direct RAM (RDRAM), direct Rambus dynamic RAM (DRDRAM), and Rambus dynamic RAM (RDRAM).

It should be noted that the technical features described in the above embodiments may be combined in any manner. For brevity, not all possible combinations of the technical features in the above embodiments are described. However, as long as there is no contradiction in the combination of these technical features, they should be considered within the scope recorded in this specification.

Furthermore, the terms "comprising," "including," or any other variation thereof used herein are intended to cover non-exclusive inclusions, such that a process, method, article, or apparatus that includes a list of elements includes not only those elements but also other elements not explicitly listed, or elements inherent to such a process, method, article, or apparatus. Without further limitations, an element defined by the phrase "comprising a..." does not exclude the presence of additional identical elements in a process, method, article, or apparatus that includes the element.

Finally, it should be noted that: obviously, the above embodiments are merely examples provided for clearly illustrating the present disclosure and are not intended to limit the implementation modes. Those skilled in the art can make other different variations or modifications based on the above description. It is neither necessary nor possible to enumerate all implementation modes here. However, obvious variations or modifications derived therefrom remain within the protection scope of the present disclosure.

## Claims

1. A data transmission method, wherein a display unit reads display data under control of a strobe signal to perform image display, the data transmission method comprising:
transmitting the display data during a first period of the strobe signal, and transmitting a check code during a second period of the strobe signal, the check code being configured to perform error check and correction on the display data and to correct erroneous data bits identified through such error check; and
determining, based on the period of the strobe signal, whether the transmitted data is the display data or the check code, and, after identifying the check code, checking and correcting the display data using the check code.

2. The data transmission method according to claim 1, wherein, before transmitting the display data during the first period of the strobe signal and transmitting the check code during the second period of the strobe signal, the method further comprises:
a data encoding stage, in which the check code is generated based on the display data and is embedded into a header and/or a footer of the display data.

3. The data transmission method according to claim 2, wherein the strobe signal is a continuous periodic pulse signal during the first period, and is a continuous low-level signal during the second period.

4. The data transmission method according to claim 3, wherein the step of determining, based on the period of the strobe signal, whether the transmitted data is the display data or the check code comprises:
when a line synchronization signal is detected and the first period of the strobe signal is not detected, determining that the transmitted data is the check code; and when the line synchronization signal is detected and the first period of the strobe signal is detected, determining that the transmitted data is the display data.

5. The data transmission method according to claim 1, wherein the check code is generated using any one selected from ECC, CRC and checksum.

6. The data transmission method according to claim 4, wherein the step of generating the check code based on the display data during the data encoding stage further comprises:
generating a data block header based on the display data to be transmitted, the data block header being sequentially concatenated with the check code and the display data to form the transmission data; and
wherein the step of determining, based on the period of the strobe signal, whether the transmitted data is the display data or the check code further comprises:
determining whether the data block header in the transmission data meets a preset condition, and upon determining that the preset condition is met, using the data block header of the current transmission data as a starting position; and
when the line synchronization signal is detected and the first period of the strobe signal is not detected, determining that the transmitted data is the check code; and when the line synchronization signal is detected and the first period of the strobe signal is detected, determining that the transmitted data is the display data.

7. The data transmission method according to claim 6, wherein the step of checking and correcting the display data using the check code after the check code is identified comprises:
checking subsequent display data using the check code, and, if an error occurs, correcting the erroneous data bits using the check code according to a corresponding algorithm, and recording and storing the erroneous data.

8. A data transmission device, the data transmission device being coupled to a display unit, the display unit reading display data under control of a strobe signal to perform image display, wherein the data transmission device comprises:
a transmission unit configured to transmit the display data during a first period of the strobe signal and to transmit a check code during a second period of the strobe signal, the check code being configured to perform error check and correction on the display data and to correct erroneous data bits identified through such error check; and
a correction unit coupled to the transmission unit and configured to determine, based on the period of the strobe signal, whether the transmitted data is the display data or the check code, and, after identifying the check code, to check and correct the display data using the check code.

9. The data transmission device according to claim 1, further comprising:
a computation unit configured to generate the check code based on the display data during the data encoding stage and to embed the check code into a header and/or a footer of the display data.

10. A display chip, comprising the data transmission device according to claim 8 or claim 9.

11. An electronic device comprising a memory and a processor, the memory storing a computer program, wherein the processor, when executing the computer program, is configured to implement the steps of the data transmission method according to any one of claims 1 to 7.

12. A computer-readable storage medium storing a computer program, wherein the computer program, when executed by a processor, is configured to implement the steps of the data transmission method according to any one of claims 1 to 7.
